# EUROPÄISCHE PATENTANMELDUNG

(11) **EP 2 848 478 A2**
(43) Veröffentlichungstag der Anmeldung: **18.03.2015**
(21) Anmeldenummer: 14466015.6
(22) Anmeldetag: 17.06.2014
(51) Int. Cl.: B60T 5/00, F16D 65/807, F16D 65/827, F16D 65/847, F16D 65/00

(54) **Flussumschalter**

(30) Priorität: 18.06.2013 CZ 20130470
(71) Anmelder: Skoda Auto A.S., 293 60 Mladá Boleslav (CZ)
(72) Erfinder: Bedrich, Stanislav, CZ-29301 Mladá Bolesla (CZ); Hrdlicka, Martin, CZ-29301 Mladá Bolesla (CZ)

(57) **Zusammenfassung**

Flussumschalter (5), der in einem Kraftfahrzeug angeordnet ist, das eine Antriebseinheit (1) mit einem Druckluftzwischenkühler (7) für den Antrieb der mit Bremsanlagen (3) ausgestatteten Antriebsräder (2) sowie eine mit der Antriebseinheit (1) gekoppelte Steuereinheit (11) und wenigstens einen Sensor aufweist (12), wobei an den Flussumschalter (5) ein Einlasskanal (13) mit einer im Frontbereich des Kraftfahrzeuges angeordneten Einlassöffnung (4), ein an die Bremsanlage (3) ausmündender Bremskanal (8) sowie eine Rohrleitung (6) angekoppelt sind, an die der Druckluftzwischenkühler (7) angeschlossen ist. In dem Flussumschalter (5) ist ein Stellglied (9) angeordnet, das zwischen einer ersten Stellung, in der der Bremskanal (8) an den Einlasskanal (13) gekoppelt wird, und einer zweiten Stellung, in der die Rohrleitung (6) an den Einlasskanal (13) gekoppelt wird und einer dritten Stellung, in der der Einlasskanal (13) weder mit dem Bremskanal (8), noch mit der Rohrleitung (6) verbunden ist, verstellt werden kann. In Abhängigkeit von Betriebsbedingungen wird die anprallende Kühlluft zu einzelnen Fahrzeugsystemen zugeführt.

## Beschreibung

### Technisches Gebiet

Die Erfindung betrifft einen Flussumschalter zur Steuerung des Luftstromes, insbesondere der anprallenden Luft beim Kraftfahrzeug betrieb.

### Bisheriger Stand der Technik

Bei der Fahrt mit dem Kraftfahrzeug kommt es vor dem Fahrzeug zur Verdichtung der anprallenden Luft. Diese wird üblich für die Motorkühlung verwendet, indem die im Kühlkreislauf zirkulierende Kühlflüssigkeit durch die den Kühler durchströmende anprallende Luft abgekühlt wird. Die anprallende Luft wird auch für die Kühlung der Druckluft in dem Zwischenkühler oder zur Kühlung der vorderen Bremsen genutzt.

Die Patentschrift DE 4420068 beschreibt eine Kühlung der Bremsanlage, bei der die Kühlluft vom Kühler über einen Bremskanal mit Verschlussklappe zugeführt wird.

Die Patentschrift DE 102012209980 beschreibt eine Lösung, bei der die anprallende Luft durch eine Einlassöffnung in den Motorraum hineingeführt wird, hinter der ein Wärmetauscher und ein Bremskanal mit einem Einlass angeordnet sind, der die Kühlluft zu einer Bremsanlage leitet. Die Einlassöffnung weist ein Verschlusssystem auf, das gleichzeitig die Kühlluftzufuhr zum Wärmetauscher sowie zum Bremskanal, bzw. zu den Bremsen schließt oder öffnet.

Der Nachteil der beschriebenen Lösung liegt darin, dass die Kühlluftzufuhr zu einzelnen Fahrzeugsystemen nicht in Abhängigkeit von extremen Betriebsbedingungen gesteuert werden kann.

### Darstellung der Erfindung

Die Aufgabe wird durch einen Flussumschalter gelöst, der im Kraftfahrzeug angeordnet ist, das eine Antriebseinheit mit einem Druckluftzwischenkühler für den Antrieb der mit Bremsanlagen ausgestatteten Antriebsräder, eine mit der Antriebseinheit gekoppelte Steuereinheit und wenigstens einen Sensor aufweist, wobei an den Flussumschalter der Einlasskanal mit einer im Frontbereich des Kraftfahrzeuges angeordneten Einlassöffnung, ein an die Bremsanlage ausmündender Bremskanal sowie eine Rohrleitung angekoppelt sind, an die der Druckluftzwischenkühler angeschlossen ist.

Die Darstellung der Erfindung liegt darin, dass in dem Flussumschalter ein Stellglied angeordnet ist, der zwischen einer ersten Stellung, in der der Bremskanal an den Einlasskanal gekoppelt wird, und einer zweiten Stellung, in der die Rohrleitung an den Einlasskanal gekoppelt wird und einer dritten Stellung, in der der Einlasskanal weder mit dem Bremskanal, noch mit der Rohrleitung verbunden ist.

Für die Wahl der Stellung des Stellgliedes entsprechend den Betriebsbedingungen ist das Stellglied mit einem Treibglied verbunden, das an die Steuereinheit angeschlossen ist.

### Übersicht der Figuren der Zeichnungen

Die Erfindung wird näher anhand der Ausführungsbeispiele gemäß den beigefügten Zeichnungen erläutert, in denen zeigen die Fig. 1 eine schematische Ansicht des Motorraumes eines Kraftfahrzeuges, die Fig. 2 das Stellglied in der ersten Stellung, die Fig. 3 das Stellglied in der zweiten Stellung und Fig. 4 das Stellglied in der dritten Stellung.

### Ausführungsbeispiel der Erfindung

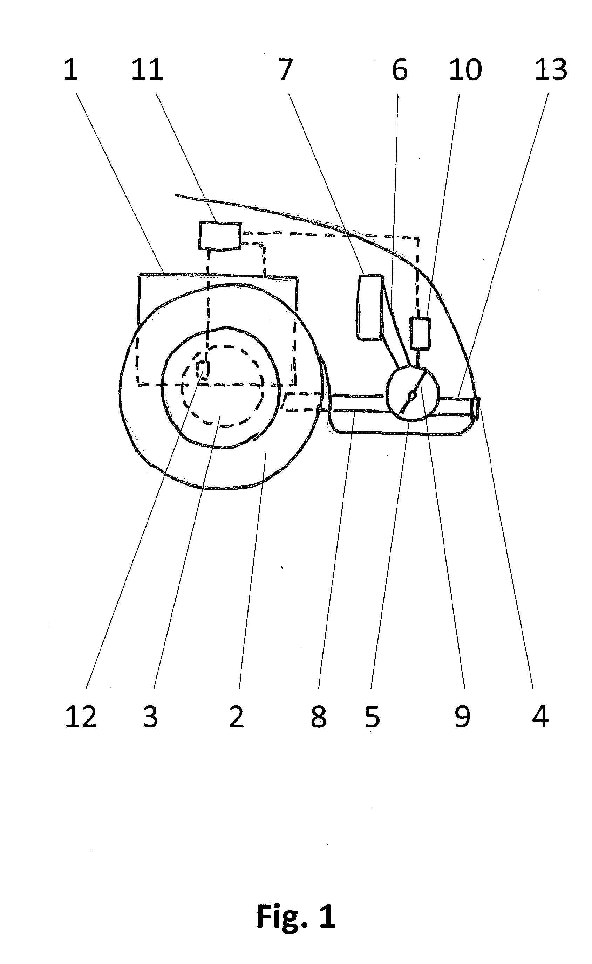

Wie der Fig. 1 zu entnehmen ist, weist ein näher nicht spezifiziertes Kraftfahrzeug eine Antriebseinheit 1 für den Antrieb Antriebsräder 2 auf, die mit Bremsanlagen 3 ausgestattet sind. Das Kraftfahrzeug weist in dem Frontbereich eine Einlassöffnung 4 für die anprallende Luft. Hinter der Einlassöffnung 4 ist ein Flussumschalter 5 angeordnet, der an die Einlassöffnung 4 über einen Einlasskanal 13 angeschlossen ist. An den Flussumschalter 5 ist eine Rohrleitung 6, die mit einem Druckluftzwischenkühler 7 gekoppelt ist, und weiter ein Bremskanal 8 angeschlossen, der die Kühlluftzufuhr zur Bremsanlage 3 besorgt. Der Flussumschalter 5 umfasst ein Stellglied 9, das mit einem Treibglied 10, z.B. einem Schrittmotor, verbunden ist. Das Fahrzeug umfasst weiter eine Steuereinheit 11 mit angeschlossenen Sensoren 12, welche die Fahrzeugbetriebszustände abfragen, wie z.B. ein Temperaturfühler, ABS-Sensor usw. An die Steuereinheit 11 ist ebenso das Treibglied 10 angeschlossen.

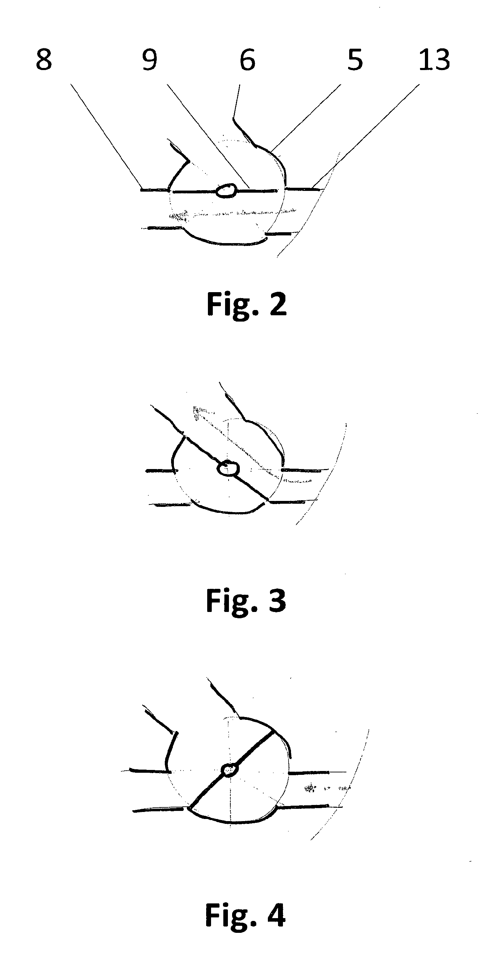

Bei der Fahrt des Kraftfahrzeuges werden aufgrund der Signale der Sensoren 12 die einzelnen Fahrtmodi des Fahrzeuges ausgewertet und über Signale von der Steuereinheit 11 geregelt. Bei Verwendung einer zusätzlichen Kühlung zum Kühlen des Druckluftzwischenkühlers 7 oder der Bremsanlage 3 wird also aufgrund dieser an das Treibglied 10 gesendeten Signale das Stellglied 9 entsprechend den einzelnen Fahrtmodi verstellt. Beim normalen Betrieb wird die zusätzliche Kühlung der Bremsanlage 3 oder des Druckluftzwischenkühlers 7 nicht verstärkt beansprucht. Die anprallende Luft hat in diesem Fall ungewünschte Auswirkungen, da diese anprallende Luft durch die Einlassöffnung 4 zu den genannten Systemen einströmt und mit ihrer Kraft auf das Fahrzeug gegen die Fahrtrichtung wirkt, was sich in dem gestiegenen Frontalwiderstand des Fahrzeuges und dem damit verbundenen gestiegenen Kraftstoffverbrauch und erhöhten Schadstoffinhalt in Abgasen sowie in gesenkter Fahrzeughöchstgeschwindigkeit auswirkt. In diesem Fall ist das Stellglied 9 in die Stellung verstellt, in der die Zufuhr der anprallenden Luft komplett geschlossen ist, wie der Fig. 4 zu entnehmen ist.

Beim intensiven und andauernden Bremsen besteht Bedarf nach verstärktem Kühlen der vorderen Bremsanlagen 3, sodass in diesem Fall das Stellglied 9 so verstellt wird, damit die anprallende Luft über den Einlasskanal 13 und Bremskanal 8 zur Bremsanlage 3 hinströmt (s. Fig. 2). Bei voller Motorleistung, wenn die Druckluft im Druckluftzwischenkühler 7 nachgekühlt werden muss, ist das Stellglied 9 so verstellt, dass der Einlass der anprallenden Luft über den Einlasskanal 13 und die Rohrleitung 6 zum Druckluftzwischenkühler 7 ermöglicht wird (s. Fig. 3).

Das wesentliche dabei ist, dass die angeführten Betriebszustände nicht gleichzeitig vorkommen können, d.h. während der Fahrt muss entweder der Druckluft in dem Zwischenkühler 7 oder die Bremsanlage 3 gekühlt werden, wobei die beiden Extremzustände nur selten vorkommen. Der gewöhnlichste Betriebszustand ist die normale Fahrt, bei der beide Systeme nicht beansprucht werden und die einströmende Luft hat die oben genannten negativen Auswirkungen.

### Bezugszeichenliste

- 1.: Antriebseinheit
- 2.: Antriebsrad
- 3.: Bremsanlage
- 4.: Einlassöffnung
- 5.: Flussumschalter
- 6.: Rohrleitung
- 7.: Druckluftzwischenkühler
- 8.: Bremskanal
- 9.: Stellglied
- 10.: Treibglied
- 11.: Steuereinheit
- 12.: Sensor
- 13.: Einlasskanal

## Patentansprüche

1. Flussumschalter (5), der im Kraftfahrzeug angeordnet ist, das eine Antriebseinheit (1) mit einem Druckluftzwischenkühler (7) für den Antrieb der mit Bremsanlagen (3) ausgestatteten Antriebsräder (2) sowie eine mit der Antriebseinheit (1) gekoppelte Steuereinheit (11) und wenigstens einen Sensor (12) aufweist, wobei an den Flussumschalter (5) ein Einlasskanal (13) mit einer im Frontbereich des Kraftfahrzeuges angeordneten Einlassöffnung (4), ein an die Bremsanlage (3) ausmündender Bremskanal (8) sowie eine Rohrleitung (6) angekoppelt sind, an die der Druckluftzwischenkühler (7) angeschlossen ist, **dadurch gekennzeichnet,** d a s s in dem Flussumschalter (5) ein Stellglied (9) angeordnet ist, das zwischen einer ersten Stellung, in der der Bremskanal (8) an den Einlasskanal (13) gekoppelt wird, und einer zweiten Stellung, in der die Rohrleitung (6) an den Einlasskanal (13) gekoppelt wird und einer dritten Stellung, in der der Einlasskanal (13) weder mit dem Bremskanal (8), noch mit der Rohrleitung (6) verbunden ist, verstellt werden kann.

2. Flussumschalter (5) nach Anspruch 1 **dadurch gekennzeichnet, dass** das Stellglied (9) mit einem Treibglied (10) verbunden ist, das an die Steuereinheit (11) angeschlossen ist.
